# EUROPÄISCHE PATENTSCHRIFT

(11) **EP 1 024 874 B1**
(45) Veröffentlichungstag und Bekanntmachung des Hinweises auf die Patenterteilung: **08.05.2002**
(21) Anmeldenummer: 98959743.0
(22) Anmeldetag: 14.10.1998
(51) Int. Cl.: B01D 29/11, B01D 39/08, B01D 46/24, B01D 46/52

(54) **RINGZARGE MIT KLEMME FÜR PAPIERSTERNENDEN**
RING ENCASEMENT WITH CLAMPS FOR ZIGZAG FOLD PAPER
SUPPORT ANNULAIRE DOTE D'UNE PINCE DESTINEE AUX EXTREMITES D'UN PAPIER EN ACCORDEON

(30) Priorität: 23.10.1997 DE 19746751
(43) Veröffentlichungstag der Anmeldung: 09.08.2000
(73) Patentinhaber: MAHLE Filtersysteme GmbH, 70376 Stuttgart (DE)
(72) Erfinder: GEBERT, Hans, D-74080 Heilbronn (DE); GEBLER, Claude, D-70327 Stuttgart (DE); NOACK, Dieter, D-74321 Bietigheim/Bissingen (DE); SCHNEIDER, Horst, D-71336 Waiblingen (DE); WAIBEL, Hans, D-71686 Remseck/Aldingen (DE)
(74) Vertreter: Patentanwalts-Partnerschaft Rotermund + Pfusch
(86) Internationale Anmeldenummer: DE9803071
(87) Internationale Veröffentlichungsnummer: WO9921636

(56) Entgegenhaltungen:
- WO-A-94/23818
- DE-A- 3 128 546
- US-A- 3 828 529

## Beschreibung

Die Erfindung betrifft einen Filter, insbesondere einen Ölfilter, nach dem Oberbegriff des Anspruches 1.

Aus der WO 94/23818 ist ein Filter bekannt, der ein Filterelement in Form eines zick-zack-förmig gefalteten Bahnenmaterials und eine als Stützkörper fungierende Trägerzarge aufweist. Das Filterelement bildet einen Faltenstern, der die hohlzylindrische Trägerzarge umschließt. Die Endfalten des Filterelements liegen aneinander und werden miteinander verbunden, um Fehlströme zwischen der Schmutzseite und der Reinseite des Filterelements zu verhindern. Die endfeste Verbindung der aneinanderliegenden Endfalten erfolgt mittels Klebstoff. Hierfür ist eine wannenartige Klammer vorgesehen, in welche die Endfalten sowie Enden eines den Faltenstern einfassenden Streckmetallmantels eingreifen. Diese Klammer bildet dabei eine Art Längsnahtclip aus, der eine Vorfixierung von Streckmetallmantel und Faltenstern erlaubt, wobei die dann V-förmig angeordneten Enden des Streckmetallmantels und des Faltensterns einen Eingußkanal für den Klebstoff bilden.

Hierbei besteht das Problem, daß die Dichtigkeit der Verbindung beider Endfalten infolge von Fertigungstoleranzen beim Kleben oder Heften nicht sicher gewährleistet werden kann, so daß ungereinigtes Strömungsmedium von der Schmutzseite in die Reinseite gelangen kann.

Ein weiterer Nachteil liegt darin, daß bei der Fertigung des Filters die Endfalten zunächst verbunden werden, anschließend das Bahnenmaterial zsu einem Faltenstern gerafft werden muß und schließlich das Filterelement in Anlagel an die Mantelfläche der Trägerzarge geblracht und in dieser Position fixiert werden muß. Diese Vielzahl von Prozeßschritten erhöht die Fertigungsdauer und auch die Zahl möglicher Fehlerquellen bei der Montage des Filters.

Der Erfindung liegt das Problem zugrunde, einen gattungsgemäßen Filter auszubilden, der mit hoher Betriebssicherheit in Großserie gefertigt werden kann.

Dieses Problem wird erfindungsgemäß mit den Merkmalen des Anspruches 1 gelöst.

Die Klemmleiste gewährleistet, daß die Endfalten mit einer definierten Klemmkraft aneinander gehalten sind, die so bemessen ist, daß Fehlströme zwischen Schmutz- und Reinseite verhindert werden. Die Fertigungsgeschwindigkeit kann erhöht werden, weil die Endfalten lediglich in die Klemmleiste eingesteckt werden müssen; darüber hinaus sind für einen dichten Abschluß der beiden Endfalten keine weiteren Maßnahmen erforderlich, so daß der Filter besonders vorteilhaft für die Großserienfertigung geeignet ist.

Die an der Trägerzarge angeordnete Klemmleiste vereinfacht den Zusammenbau der einzelnen Filterelemente. Das Filterelement ist automatisch mit der Trägerzarge verbunden, sobald die Endfalten in die Klemmleiste eingesteckt werden.

Zusätzliche, das Filterelement stützende Bauteile können entfallen oder zumindest vereinfacht ausgebildet sein.

Gemäß einer bevorzugten Ausführung weist die Klemmleiste etwa die gleiche axiale Länge auf wie die Trägerzarge, so daß die Endfalten des Filterelements über die gesamte axiale Bauhöhe des Filters sicher zusammengehalten sind.

Die Klemmleiste besteht zweckmäßig aus zwei axial verlaufenden Klemmwänden, zwischen denen ein Klemmraum zur Aufnahme der Endfalten des Filters gebildet ist. Die vorteilhaft spiegelsymmetrisch ausgebildeten Klemmwände weisen auf der dem Klemmraum zugewandten Seite jeweils eine Klemmnase auf, über die der für eine dichte Verbindung erforderliche Klemmdruck aufgebracht wird. Die Klemmwände können einen kleinen, sich radial nach außen öffnenden Winkel einschließen, um das Einstecken der Endfalten zu erleichtern.

In den Filterfalten des Filterelements können Ausprägungen vorgesehen sein, die dafür sorgen, daß die Wandungen der sternförmig um die Trägerzone gruppierten Filterfalten nicht unmittelbar aneinanderliegen, sondern radial aufgefächert angeordnet sind und eine Durchströmung des zu reinigenden Mediums ermöglichen. Zur Aufnahme der Ausprägungen in den Endfalten sind in den Klemmwänden in Längsrichtung verlaufende Ausnehmungen vorgesehen. Die Seitenflächen der beiden in die Klemmleiste eingesteckten Endfalten können dadurch mit geringstmöglichem Abstand aneinanderliegen.

Die Stirnseiten der Trägerzarge, der Klemmleiste und des Filterelements sind zweckmäßig von Endscheiben abgedeckt, um die Schmutzseite von der Reinseite zu separieren und um eine axiale, auf den Filter wirkende Belastung auf die stabile Trägerzarge zu übertragen. Ein dichter Abschluß kann durch Einplastifizieren der Stirnseiten in die Endscheibe erzielt werden. Um das Einplastifizieren zu erleichtern ist vorgesehen, daß die Stirnseiten von Trägerzarge und Klemmleiste jeweils einen Plastifizierungsrand aufweisen, dessen Wandstärke gegenüber der Wandstärke von Trägerzarge und Klemmleiste reduziert ist. Zweckmäßig entspricht die Dicke des Plastifizierungsrands der Dicke der Filterfalten, so daß beim Eindrücken der Stirnseite in die plastisch verformbare Endscheibe die Klemmleiste und die Trägerzarge etwa den gleichen, reduzierten Widerstand bieten wie das Filterelement; dies gewährleistet ein gleichmäßiges Eindrücken in die Endscheibe rechtwinklig zur Längsachse des Filters.

Der verjüngte Plastifizierungsrand garantiert außerdem eine definierte Eindrücktiefe in die Endscheibe. Zwischen dem Plastifizierungsrand und der jeweiligen Stirnseite der Wandung von Trägerzarge bzw. Klemmleiste ist eine Schulter gebildet, die die maximale Eindrücktiefe markiert. Sobald die Schulter die Endscheibe berührt, erhöht sich sprunghaft der für ein Eindrücken erforderliche Druck. Bei einem vorgegebenen, konstanten Plastifizierungsdruck wird dadurch sichergestellt, daß nur bis zur Anlage an die Schulter eingedrückt werden kann.

Weitere Vorteile und zweckmäßige Ausführungsformen sind den weiteren Ansprüchen, der Figurenbeschreibung und den Zeichnungen zu entnehmen. Es zeigen
- Fig. 1: einen Filter in einem Schnitt nach Linie I-I in Fig. 3,
- Fig. 2: die Trägerzarge mit Klemmleiste des Filters nach Fig. 1 in der gleichen Schnittdarstellung wie in Fig. 1 angegeben,
- Fig. 3: einen Schnitt durch den Filter,
- Fig. 4: eine Ansicht der Trägerzarge und Klemmleiste mit Plastifizierungsrand,
- Fig. 5: eine Draufsicht auf die Trägerzarge und Klemmleiste mit Plastifizierungsrand,
- Fig. 6: einen Schnitt gemäß Schnittlinie VI-VI aus Fig. 5,
- Fig. 7: die Trägerzarge und Klemmleiste in einer weiteren Ausführung.

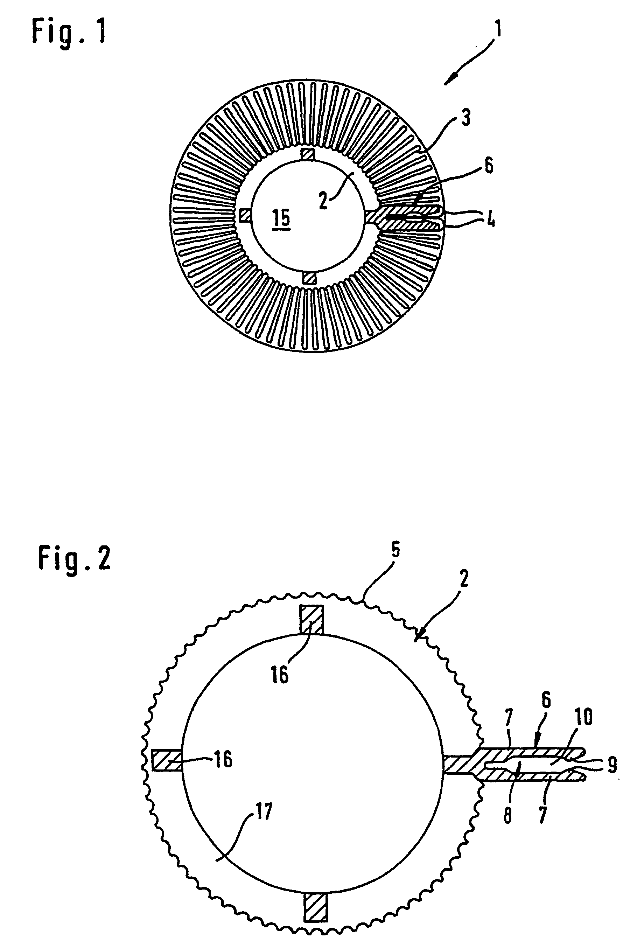

Der in Fig. 1 dargestellte Ölfilter 1 für Brennkraftmaschinen weist ein Filterelement 3 auf, das von einer hohlzylindrischen Trägerzarge 2 gehalten ist. Das Filterelement 3 besteht aus zick-zack-förmig gefaltetem Bahnenmaterial aus Kunststoffvlies und umschließt in Form eines Faltensterns die Mantelfläche der Trägerzarge 2. Das Filterelement 3 wird radial von außen von dem zu reinigenden Medium angeströmt. Die Trägerzarge 2 weist Ausnehmungen in der Mantelfläche auf, so daß das Medium, das das Filterelement 3 passiert hat, in den zylindrischen Reinraum 15 im Inneren der Trägerzarge 2 einströmen und der weiteren Verwendung zugeführt werden kann.

Der Filter 1 kann gegebenenfalls auch als Kraftstoffilter eingesetzt werden.

An der Mantelfläche der Trägerzarge 2 ist eine Klemmleiste 6 angeordnet, die die Endfalten 4 des Filterelements 3 aufnimmt und diese miteinander verbindet, um Fehlströme des zu reinigenden Mediums zu verhindern. Die Klemmleiste 6 besteht zweckmäßig wie die Trägerzarge 2 aus Kunststoff und ist an der Trägerzarge 2 unverlierbar gehalten, insbesondere angespritzt. Die Klemmleiste 6 weist die gleiche axiale Länge auf wie die Trägerzarge 2 und ist über die axiale Länge durchgehend ohne Durchbrechungen ausgebildet.

Wie der vergrößerten Darstellung gemäß Fig. 2 zu entnehmen, besteht die Klemmleiste 6 aus zwei näherungsweise parallelen, zur Mantelfläche 5 der Trägerzarge radial ausgerichteten Klemmwänden 7, die zueinander spiegelsymmetrisch ausgebildet sind. Die beiden Klemmwände 7 bilden ein einteiliges Bauteil und sind im Bereich der Mantelfläche 5 der Trägerzarge 2 miteinander verbunden. Die Klemmwände 7 begrenzen einen zwischenliegenden Klemmraum 8 zur Aufnahme der Endfalten des Filterelements. Jede Klemmwand 7 weist im Bereich der Einschuböffnung für die Endfalten eine Klemmnase 9 auf, die einen Klemmbereich für die Endfalten bildet. Die beiden gegenüberliegenden Klemmnasen 9 fixieren die zwei in den Klemmraum 8 eingesteckten Endfalten über die gesamte Länge der Klemmleiste 6.

Jede Klemmwand 7 weist zwischen der Klemmnase 9 und dem beide Klemmwände verbindenden Abschnitt im Bereich der Mantelfläche 5 eine Ausnehmung 10 auf, die sich ebenso wie die Klemmnasen 9 über die axiale Länge der Klemmleiste erstreckt. Die Ausnehmung 10 dient der Aufnahme von Ausprägungen in den Filterfalten, wobei die Breite der Ausnehmungen der Breite der Ausprägungen entspricht.

Es kann zweckmäßig sein, die Klemmwände 7 geringfügig winklig mit einem sich radial nach außen öffnenden Winkel anzuordnen; hierdurch wird bei der Montage das Einstecken der Endfalten erleichtert.

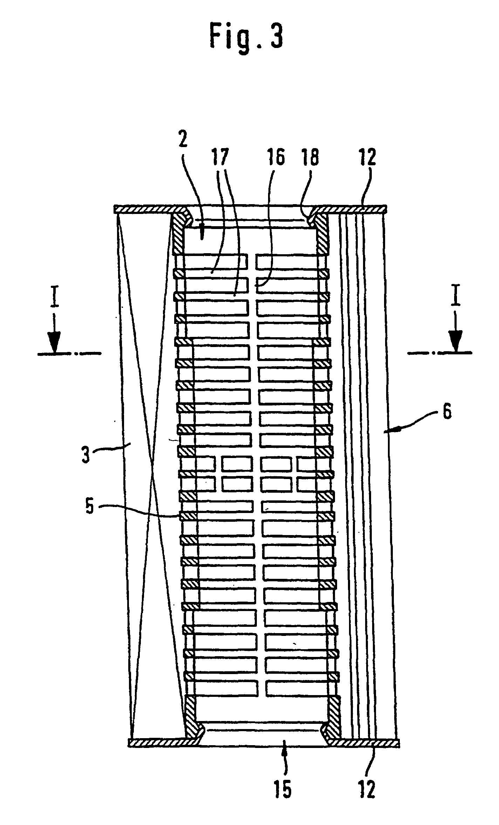

Wie Fig. 2 in Verbindung mit Fig. 3 zu entnehmen, besteht die Trägerzarge 2 aus einzelnen, übereinanderliegenden Ringelementen 17, die über vier jeweils um 90° versetzte Längsstege 16 miteinander verbunden sind. Die Mantelfläche 5 der Trägerzarge bzw. der Ringelemente 17 ist geriffelt ausgebildet, um ein Abrutschen des Filterelements an der Trägerzarge zu verhindern.

In Fig. 3 ist weiterhin dargestellt, daß die Trägerzarge 2, die Klemmleiste 6 und das Filterelement 3 an beiden Stirnseiten des Filters jeweils von einer Endscheibe 12, die eine zentrale, dem Reinraum 15 zugewandte Öffnung aufweist, abgedeckt sind. Die Endscheibe 12 besteht aus einem plastifizierbaren Kunststoff und wird bei der Herstellung des Filters auf der den Filterelementen zugewandten Seite angeschmolzen. Die Endscheibe 12 wird anschließend mit seiner in den Reinraum 15 einragenden Ringschulter 18 auf die Trägerzarge 2 aufgesteckt, bis die Stirnseiten von Trägerzarge. 2, Klemmleiste 6 und Filterelement 3 geringfügig in die plastisch verformbare Seite der Endscheibe 12 einragen. Nach dem Aushärten der Endscheibe 12 ist der Reinraum 15 dicht von der Schmutzseite des Filters abgeschlossen, so daß Fehlströme verhindert werden.

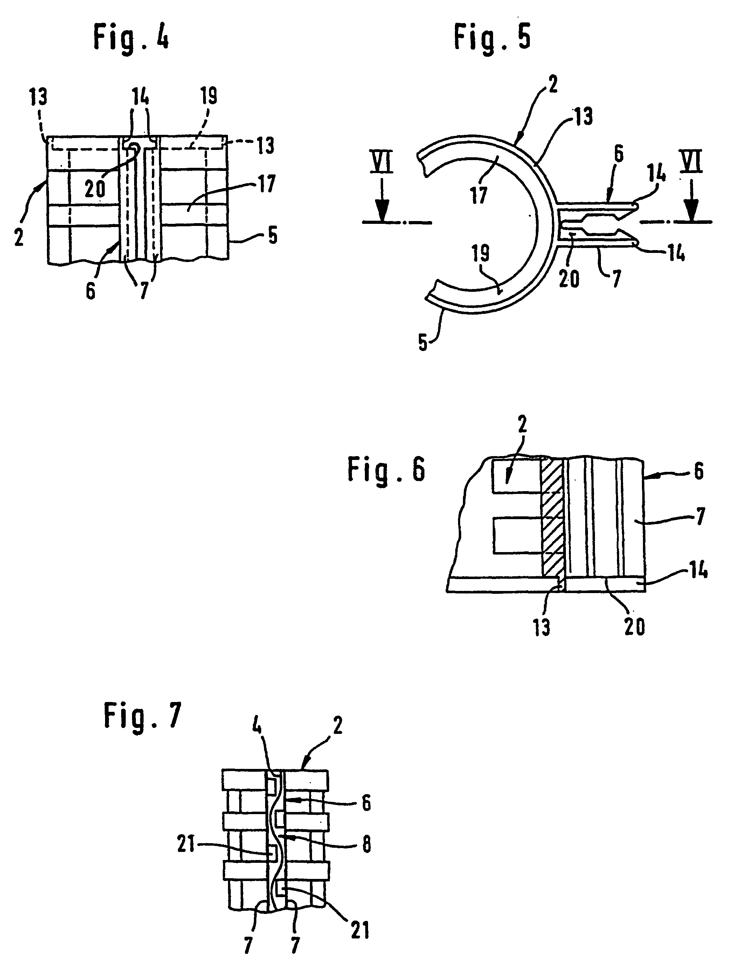

Bei der in den Fig. 4 bis 6 dargestellten Ausführung wird das Einplastifizieren der Stirnseiten von Trägerzarge 2 und Klemmleiste 6 in die Endscheibe 12 unterstützt. Die Trägerzarge 2 und die Klemmleiste 6 weisen jeweils an ihrer Stirnseite einen Plastifizierungsrand 13, 14 auf, der in die Endscheibe einplastifiziert wird.

Der Plastifizierungsrand 13 der Trägerzarge 2 ist als umlaufende Ringwandung ausgebildet, deren Dicke geringer ist als die Wandstärke eines Ringelements 17 der Trägerzarge 2, so daß eine Auflageschulter 19 im Bereich der Stirnseite gebildet ist.

Die Außenseite des Plastifizierungsrands 13 liegt im Ausführungsbeispiel in der Mantelfläche 5 der Trägerzarge. Gemäß einer nicht dargestellten Ausführung kann der Plastifizierungsrand 13 auch mit dem Innenmantel der Trägerzarge abschließen oder mittig auf der Stirnseite der Trägerzarge angeordnet sein, so daß beidseitig des Plastifizierungsrands eine umlaufende Auflageschulter gebildet ist.

Auf der Stirnseite jeder Klemmwand 7 der Klemmleiste 6 ist ein Plastifizierungsrand 14 vorgesehen, der sich über die gesamte Breite der Klemmwand bis zum Plastifizierungsrand 13 der Trägerzarge 2 erstreckt. Der Plastifizierungsrand 13 schließt mit der Außenseite der Klemmwand 7 ab. Die Dicke des Plastifizierungsrands 13 ist geringer als die Wandstärke der Klemmwand 7, so daß ein Auflageabschnitt 20 im Bereich der Stirnseite der Klemmwand 7 gebildet ist, der nach innen gerichtet ist.

Die Dicke der beiden Plastifizierungsränder 13 und 14 ist etwa gleich groß und entspricht der Dicke einer Filterfalte des Filterelements. Die axiale Erstreckung der Trägerzarge und der Klemmleiste einschließlich der jeweiligen Plastifizierungsränder 13, 14 ist etwa gleich wie die axiale Länge des Filterelements. Dies hat den Vorteil, daß beim Einplastifizieren die Trägerzarge, die Klemmleiste und das Filter-element gleichmäßig in die Endscheibe eingedrückt werden können, bis die Auflageschulter 19 bzw. der Auflageabschnitt 20 zur Anlage an die Endscheibe gelangt.

In der Ausführung nach Fig. 7 weist die an der Trägerzarge 2 befestigte Klemmleiste 6 zwei zueinander im wesentlichen parallele Klemmwände 7 auf, zwischen denen die Endfalten 4 des Filterelements aufgenommen sind. Der Klemmbereich an den Klemmwänden 7 umfaßt einzelne Klemmblöcke 21, die wechselweise versetzt an jeder Klemmwand 7 vorgesehen sind; der Klemmbereich ist also durchbrochen ausgebildet. Die Breite jedes Klemmblocks 21 übersteigt geringfügig die Hälfte der lichten Breite des Klemmraums 8, so daß die versetzt angeordneten Klemmblöcke 21 in Längsrichtung der Klemmleiste gesehen sich teilweise überschneiden. Dementsprechend nehmen die im Klemmraum 8 festgesetzten Endfalten 4 eine Wellenform ein.

## Patentansprüche

1. Filter, insbesondere Ölfilter, mit einer einen Reinraum (15) begrenzenden Trägerzarge (2) und einem die Trägerzarge (2) umschließenden Filterelement (3), das aus zick-zack-förmig gefaltetem Bahnenmaterial besteht, wobei die Endfalten (4) des Filterelements (3) aneinanderliegend zusammengehalten sind, wobei an der äußeren Mantelfläche (5) der Trägerzarge (2) eine die Endfalten (4) des Filterelements (3) fixierende Klemmleiste (6) angeordnet ist,
**dadurch gekennzeichnet,**
**daß** die Klemmleiste (6) die Endfalten (4) mit einer definierten Klemmkraft aneinander hält, die so bemessen ist, daß Fehlströme zwischen Schmutz- und Reinseite verhindert werden, und daß die Trägerzarge (2) und die Klemmleiste (6) ein einteiliges Bauteil bilden.

2. Filter nach Anspruch 1,
**dadurch gekennzeichnet,**
**daß** die Klemmleiste (6) etwa die gleiche axiale Länge wie die Trägerzarge (2) aufweist.

3. Filter nach Anspruch 1 oder 2,
**dadurch gekennzeichnet,**
**daß** die Klemmleiste (6) zwei Klemmwände (7) aufweist, die einen zwischenliegenden Klemmraum (8) begrenzen.

4. Filter nach Anspruch 3,
**dadurch gekennzeichnet,**
**daß** die Ebene der Klemmwände (7) etwa radial zur hohlzylindrisch ausgebildeten Trägerzarge (2) verläuft.

5. Filter nach Anspruch 3 oder 4,
**dadurch gekennzeichnet,**
**daß** die Klemmwände (7) spiegelsymmetrisch ausgebildet sind.

6. Filter nach einem der Ansprüche 3 bis 5,
**dadurch gekennzeichnet,**
**daß** die Klemmwände (7) auf der dem Klemmraum (8) zugewandten Seite eine Klemmnase (9) aufweisen.

7. Filter nach einem der Ansprüche 3 bis 6,
**dadurch gekennzeichnet,**
**daß** die Klemmwände (7) eine in Längsrichtung verlaufende, sich über die Länge der Klemmwand (7) erstreckende Ausnehmung (10) zur Aufnahme von Ausprägungen in den Filterfalter. aufweisen.

8. Filter nach einem der Ansprüche 3 bis 7,
**dadurch gekennzeichnet,**
**daß** die Klemmwände (7) einen kleinen, sich radial nach außen öffnenden Winkel einschließen.

9. Filter nach einem der Ansprüche 1 bis 8,
**dadurch gekennzeichnet,**
**daß** der Klemmbereich der Klemmwände (7) durchgehend ausgebildet sind.

10. Filter nach einem der Ansprüche 1 bis 8,
**dadurch gekennzeichnet,**
**daß** der Klemmbereich an den Klemmwänden (7) durch einzelne Klemmblöcke (21) ausgebildet ist.

11. Filter nach einem der Ansprüche 1 bis 10,
**dadurch gekennzeichnet,**
**daß** die Stirnseite der Trägerzarge (2), der Klemmleiste (6) und des Filterelements (3) von einer Endscheibe (12) verschlossen ist.

12. Filter nach Anspruch 11,
**dadurch gekennzeichnet,**
**daß** die Endscheibe (12) aus einem plastifizierbaren Kunststoff besteht.

13. Filter nach Anspruch 12,
**dadurch gekennzeichnet**
**daß** an der Stirnseite von Trägerzarge (2) und Klemmleiste (6) ein im Querschnitt verjüngter Plastifizierungsrand (13, 14) vorgesehen ist.

14. Filter nach Anspruch 13,
**dadurch gekennzeichnet**
**daß** die Dicke des Plastifizierungsrands (13, 14) etwa der Dicke der Filterfalten des Filterelements (3) entspricht.

15. Filter nach einem der Ansprüche 1 bis 14,
**dadurch gekennzeichnet**
**daß** die Trägerzarge (2) und die Klemmleiste (6) aus Kunststoff bestehen.

16. Filter nach Anspruch 10,
**dadurch gekennzeichnet,**
**daß** die einzelnen Klemmblöcke (21) in Längsrichtung der Klemmleiste (6) wechselweise versetzt an den Klemmwänden (7) angeordnet sind, so daß die aufgenommenen Endfalten (4) einen wellenförmigen Verlauf einnehmen.

## Claims

1. A filter, in particular oil filter, having a carrier casing (2) which bounds a clean chamber (15), and having a filter element (3) which encloses the carrier casing (2) and consists of zigzag-folded web material, the end folds (4) of the filter element (3) being held together such that they butt against one another, a clamping strip (6) which fixes the end folds (4) of the filter element (3) being arranged on the outer lateral surface (5) of the carrier casing (2), wherein the clamping strip (6) holds the end folds (4) against one another with a defined clamping force which is of such a magnitude that unwanted flows between the contaminated side and clean side are prevented, and wherein the carrier casing (2) and the clamping strip (6) form a single-piece component.

2. The filter as claimed in claim 1, wherein the clamping strip (6) has approximately the same axial length as the carrier casing (2).

3. The filter as claimed in claim 1 or 2, wherein the clamping strip (6) has two clamping walls (7) which bound a clamping chamber (8) between them.

4. The filter as claimed in claim 3, wherein the plane of the clamping walls (7) runs approximately radially to the hollow-cylindrical carrier casing (2).

5. The filter as claimed in claim 3 or 4, wherein the clamping walls (7) are of mirror-symmetrical design.

6. The filter as claimed in one of claims 3 to 5, wherein, on the side directed toward the clamping chamber (8), the clamping walls (7) have a clamping nose (9).

7. The filter as claimed in one of claims 3 to 6, wherein the clamping walls (7) have a recess (10) which runs in the longitudinal direction, extends over the length of the clamping wall (7) and is intended for receiving stamped formations in the filter folds.

8. The filter as claimed in one of claims 3 to 7, wherein the clamping walls (7) enclose a small angle which opens in the radially outward direction.

9. The filter as claimed in one of claims 1 to 8, wherein the clamping region of the clamping walls (7) is of continuous design.

10. The filter as claimed in one of claims 1 to 8, wherein the clamping region on the clamping walls (7) is formed by individual clamping blocks (21).

11. The filter as claimed in one of claims 1 to 10, wherein the end side of the carrier casing (2), of the clamping strip (6) and of the filter element (3) is closed off by an end disk (12).

12. The filter as claimed in claim 11, wherein the end disk (12) consists of a plastifiable polymer material.

13. The filter as claimed in claim 12, wherein a cross-sectionally tapered plastification border (13, 14) is provided on the end side of the carrier casing (2) and clamping strip (6).

14. The filter as claimed in claim 13, wherein the thickness of the plastification border (13, 14) corresponds approximately to the thickness of the filter folds of the filter element (3).

15. The filter as claimed in one of claims 1 to 14, wherein the carrier casing (2) and the clamping strip

16. The filter as claimed in claim 10, wherein the individual clamping blocks (21) are arranged on the clamping walls (7) such that they are offset alternately in the longitudinal direction of the clamping strip (6), with the result that the end folds (4) received assume an undulating progression.

## Revendications

1. Filtre, en particulier filtre à huile, comportant un cadre porteur (2) délimitant un espace épuré (15) et un élément filtrant (3) entourant le cadre porteur (2) et fait d'un matériau en feuille plié en zigzag, les plis d'extrémité (4) de l'élément filtrant (3) étant maintenus l'un à côté de l'autre, une barrette de serrage (6), fixant les plis d'extrémité (4) de l'élément filtrant (3), étant disposée sur la surface d'enveloppe extérieure (5) du cadre porteur (2),
**caractérisé en ce**
**que** la barrette de serrage (6) maintient l'un sur l'autre les plis d'extrémité (4) avec une force de serrage définie, qui est calculée de telle sorte que des courants de fuite sont empêchés entre le côté brut et le côté épuré, et que le cadre porteur (2) et la barrette de serrage (6) forment un composant d'une seule pièce.

2. Filtre suivant la revendication 1,
**caractérisé en ce**
**que** la barrette de serrage (6) présente à peu près la même longueur axiale que le cadre porteur (2).

3. Filtre suivant l'une des revendications 1 et 2,
**caractérisé en ce**
**que** la barrette de serrage (6) présente deux parois de serrage (7), qui délimitent un espace de serrage (8) intermédiaire.

4. Filtre suivant la revendication 3,
**caractérisé en ce**
**que** le plan des parois de serrage (7) s'étend à peu près radialement par rapport au cadre porteur (2) de configuration cylindrique creuse.

5. Filtre suivant l'une des revendications 3 et 4,
**caractérisé en ce**
**que** les parois de serrage (7) ont une configuration symétrique par rapport à un plan.

6. Filtre suivant l'une des revendications 3 à 5,
**caractérisé en ce**
**que** les parois de serrage (7) présentent un ergot de serrage (9) sur le côté tourné vers l'espace de serrage (8).

7. Filtre suivant l'une des revendications 3 à 6,
**caractérisé en ce**
**que** les parois de serrage (7) présentent un creux (10), s'étendant dans la direction longitudinale sur la longueur de la paroi de serrage (7), pour recevoir des reliefs dans les plis du filtre.

8. Filtre suivant l'une des revendications 3 à 7,
**caractérisé en ce**
**que** les parois de serrage (7) forment entre elles un angle faible, s'ouvrant radialement vers l'extérieur.

9. Filtre suivant l'une des revendications 1 à 8,
**caractérisé en ce**
**que** la zone de serrage des parois de serrage (7) est formée de manière continue.

10. Filtre suivant l'une des revendications 1 à 8,
**caractérisé en ce**
**que** la zone de serrage sur les parois de serrage (7) est formée par des blocs de serrage (21) individuels.

11. Filtre suivant l'une des revendications 1 à 10,
**caractérisé en ce**
**que** le côté frontal du cadre porteur (2), de la barrette de serrage (6) et de l'élément filtrant (3) est fermé par une plaque d'extrémité (12).

12. Filtre suivant la revendication 11,
**caractérisé en ce**
**que** la plaque d'extrémité (12) est en une matière plastique plastifiable.

13. Filtre suivant la revendication 12,
**caractérisé en ce**
**qu'**un bord de plastification (13, 14) rétréci en section transversale est prévu sur le côté frontal du cadre porteur (2) et de la barrette de serrage (6).

14. Filtre suivant la revendication 13,
**caractérisé en ce**
**que** l'épaisseur du bord de plastification (13, 14) correspond à peu près à l'épaisseur des plis de l'élément filtrant (3).

15. Filtre suivant l'une des revendications 1 à 14,
**caractérisé en ce**
**que** le cadre porteur (2) et la barrette de serrage (6) sont en matière plastique.

16. Filtre suivant la revendication 10,
**caractérisé en ce**
**que** les blocs de serrage (21) individuels sont disposés avec décalage alterné sur les parois de serrage (7), dans la direction longitudinale de la barrette de serrage (6), de sorte que les plis d'extrémité (4) reçus suivent un parcours ondulé.
